(19)

**Europäisches Patentamt**
**European Patent Office**
**Office européen des brevets**

(11) **EP 4 425 099 B1**

(12) **EUROPEAN PATENT SPECIFICATION**

(45) Date of publication and mention
of the grant of the patent:
**22.10.2025 Bulletin 2025/43**

(21) Application number: **23218307.9**

(22) Date of filing: **19.12.2023**

(51) International Patent Classification (IPC):
**G01C 21/16** (2006.01)

(52) Cooperative Patent Classification (CPC):
**G01C 21/165; G01S 19/393; G01S 19/47;**
**G01S 19/49**

(54) **MULTI-SENSOR FUSION METHOD BASED ON AUTONOMOUS DRIVING, APPARATUS, MEDIUM AND VEHICLE**

MULTISENSORFUSIONSVERFAHREN AUF BASIS VON AUTONOMEM FAHREN, VORRICHTUNG, MEDIUM UND FAHRZEUG

PROCÉDÉ DE FUSION DE CAPTEURS MULTIPLES BASÉ SUR UNE CONDUITE AUTONOME, APPAREIL, SUPPORT ET VÉHICULE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **30.01.2023 CN 202310044946**

(43) Date of publication of application:
**04.09.2024 Bulletin 2024/36**

(73) Proprietor: **Anhui NIO Autonomous Driving Technology Co., Ltd.**
**Hefei, Anhui 230601 (CN)**

(72) Inventors:
• **SHEN, Dayun**
**Hefei, Anhui Province (CN)**
• **YUAN, Hongyuan**
**Hefei, Anhui Province (CN)**
• **Yi, Shichun**
**Hefei, Anhui Province (CN)**

• **YANG, Dongsheng**
**Hefei, Anhui Province (CN)**

(74) Representative: **Vossius & Partner**
**Patentanwälte Rechtsanwälte mbB**
**Siebertstrasse 3**
**81675 München (DE)**

(56) References cited:
**EP-A1- 3 940 421      CN-A- 114 413 934**
**CN-B- 107 289 933      CN-B- 111 721 289**
**US-A1- 2021 341 624**

• **BAI YUTING ET AL: "State of art on state estimation: Kalman filter driven by machine learning", ANNUAL REVIEWS IN CONTROL, PERGAMON, AMSTERDAM, NL, vol. 56, 1 January 2023 (2023-01-01), XP087439281, ISSN: 1367-5788, [retrieved on 20231011], DOI: 10.1016/ J.ARCONTROL.2023.100909**

**Description**

The present application claims priority of CN patent application 202310044946.7 filed on January 30, 2023 with the title "Multi-sensor fusion method based on autonomous driving, apparatus, medium and vehicle".

**Technical Field**

The disclosure relates to the technical field of autonomous driving, and specifically provides a multi-sensor fusion method based on autonomous driving, an apparatus, a medium and a vehicle.

**Background Art**

In autonomous driving technologies, multi-sensor fusion algorithms generally use a Kalman filter method to implement fusion. When some state dimensions are not objective or need to be forced not to be updated, corresponding state dimensions need to be suppressed.

In the prior art, two methods are generally used: One is to use a Schmitt trigger method, but this method does not consider an impact of non-updated dimensions on covariance of other dimensions, and it does not actually have a suppressive effect; and the other is to force a state and the covariance not to be updated, and it also does not consider an impact of the covariance.

Accordingly, there is a need for a novel multi-sensor fusion solution to solve the above problems in the art.

US 2021/341624 A1 discloses a navigation apparatus which determines an estimated position of an object. CN 111 721 289 B discloses a vehicle positioning method, device and equipment, a storage medium and a vehicle, and relates to the field of automatic driving. CN 107 289 933 B discloses a fused dual-Kalman filter navigation device based on a MEMS sensor and VLC positioning, and a navigation method.

**Summary**

The subject-matter of the present invention is defined by the features of the independent claims. Further preferred embodiments of the present invention are defined in the dependent claims. In particular, to overcome the above defects, the disclosure is proposed to solve or at least partially solve the problem of how to effectively suppress corresponding

state quantities when some state dimensions need to be disabled during multi-sensor fusion, without affecting other states.

In a first aspect, the disclosure provides a multi-sensor fusion method based on autonomous driving. The method includes:

obtaining a first target state quantity that requires state suppression when performing multi-sensor fusion by applying Kalman filtering;

in a propagation phase of the Kalman filtering, setting a state transition matrix for the first target state quantity's self-dimension as an identity matrix, and setting state transition matrices for dimensions related to both the first target state quantity and a second target state quantity s zero matrices, where the second target state quantity is a state quantity that does not require state suppression; and

in an update phase of the Kalman filtering, setting a Jacobian matrix of the first target state quantity as a zero matrix, and setting a Kalman gain matrix of the first target state quantity as a zero matrix, to implement state suppression of the first target state quantity during the multi-sensor fusion without affecting an update of a covariance matrix of the second target state quantity.

In a technical solution of the above multi-sensor fusion method based on autonomous driving, the step of "obtaining a first target state quantity that requires state suppression" includes:

determining whether each state quantity of the Kalman filtering satisfies a corresponding state suppression condition; and

using a state quantity that satisfies the state suppression condition as the first target state quantity.

In a technical solution of the above multi-sensor fusion method based on autonomous driving, the state quantity includes a wheel speed coefficient, and a state suppression condition for the wheel speed coefficient is as follows:

a speed of the autonomous driving is less than or equal to a preset speed threshold; or

a route of the autonomous driving is not a straight line.

In a technical solution of the above multi-sensor fusion method based on autonomous driving, the state quantity includes a time delay of a sensor, and a state suppression condition for the time delay is as follows:
an acceleration of the autonomous driving is less than or equal to a preset acceleration threshold.

In a technical solution of the above multi-sensor fusion method based on autonomous driving, the state quantity includes mounting angle errors of sensors modeled in a wheel speed coordinate system, the sensors include an inertial measurement unit, a GNSS sensor, and a map matching positioning sensor, and the mounting angle errors of the sensors include a pitch angle error and/or a yaw angle error;

a state suppression condition for the pitch angle error of the inertial measurement unit is as follows:

> a speed of the autonomous driving is less than or equal to a preset speed threshold; or
> a route of the autonomous driving is not a straight line;
> a state suppression condition for the yaw angle error of the inertial measurement unit is as follows:

>> a speed of the autonomous driving is less than or equal to a preset speed threshold; or
>> an acceleration of the autonomous driving is less than or equal to a preset acceleration threshold; or
>> a route of the autonomous driving is not a straight line;
>> a state suppression condition for the yaw angle error of the GNSS sensor is as follows:

>>> a speed of the autonomous driving is less than or equal to a preset speed threshold; or
>>> calibration of the yaw angle error of the inertial measurement unit has not reached a convergence condition; and
>>> a state suppression condition for the yaw angle error of the map matching positioning sensor is as follows:

>>>> a speed of the autonomous driving is less than or equal to a preset speed threshold; or
>>>> calibration of the yaw angle error of the inertial measurement unit has not reached a convergence condition; or
>>>> the map matching positioning sensor has not obtained a high-quality matching positioning result, where the high-quality matching positioning result is determined based on a quality bit of data in the matching positioning result.

In a technical solution of the above multi-sensor fusion method based on autonomous driving, the state quantity includes a lever arm value between a sensor coordinate system of a sensor and an inertial measurement unit coordinate system of an inertial measurement unit, and a state suppression condition for the lever arm value is as follows:
a speed of the autonomous driving is less than or equal to a preset speed threshold.

In a technical solution of the above multi-sensor fusion method based on autonomous driving, the state quantity includes a local map offset of a digital map, and a state suppression condition for the local map offset is as follows:

> a speed of the autonomous driving is less than or equal to a preset speed threshold; or
> the map matching positioning sensor has not obtained a high-quality matching positioning result, where the high-quality matching positioning result is determined based on a quality bit of data in the matching positioning result; or
> calibration of the yaw angle error of the inertial measurement unit has not reached a convergence condition.

In a second aspect, a control apparatus is provided. The control apparatus includes at least one processor and at least one storage apparatus configured to store a plurality of pieces of program code, where the program code is adapted to be loaded and executed by the processor to perform the multi-sensor fusion method based on autonomous driving in any one of the technical solutions of the above multi-sensor fusion method based on autonomous driving.

In a third aspect, a computer-readable storage medium is provided. The computer-readable storage medium stores a plurality of pieces of program code, where the program code is adapted to be loaded and executed by a processor to perform the multi-sensor fusion method based on autonomous driving in any one of the technical solutions of the above multi-sensor fusion method based on autonomous driving.

In a fourth aspect, a vehicle is provided. The vehicle includes the control apparatus in the technical solution of the control apparatus.

The above one or more technical solutions of the disclosure have at least one or more of the following beneficial effects:
In the technical solutions implementing the disclosure, according to the disclosure, when multi-sensor fusion is performed by applying Kalman filtering, if there is the first target state quantity that requires state suppression, in the propagation phase of Kalman filtering, the state transition matrix for the own dimension of the first target state quantity may be set as the identity matrix, and state transition matrices for the dimensions related to both the first target state quantity and the second target state quantity may be set as the zero matrix; and in the update phase of Kalman filtering, the Jacobian matrix of the first target state quantity is set as the zero matrix, and the Kalman gain matrix of the first target state quantity is set as the zero matrix. Through the above configuration method, according to the disclosure, when state suppression is performed on the first target state quantity, it will not affect the covariance matrix of the second target state quantity, thereby not affecting the propagation and update process of the second target state quantity. Moreover, the multi-sensor fusion method of the disclosure can flexibly switch the first target state quantity without affecting a main state, and has the characteristics of being convenient and reliable.

## Brief Description of the Drawings

The disclosed content of the disclosure will become more readily understood with reference to the accompanying drawings. Those skilled in the art readily understand that these accompanying drawings are merely for illustrative purposes and are not intended to limit the scope of protection of the disclosure. In the drawings:

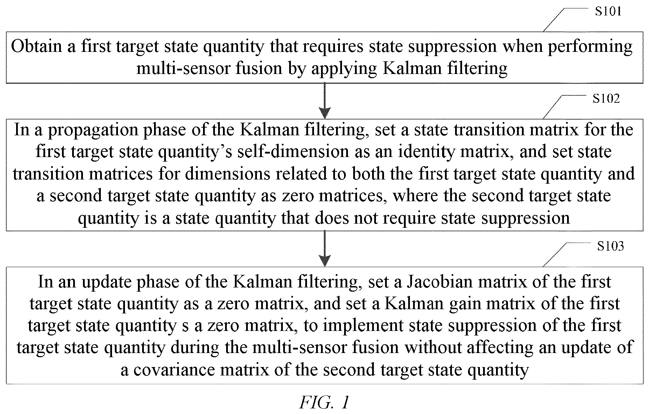

FIG. 1 is a schematic flowchart of main steps of a multi-sensor fusion method based on autonomous driving according to an embodiment of the disclosure.

## Detailed Description of Embodiments

Some implementations of the disclosure are described below with reference to the accompanying drawings. Those skilled in the art should understand that these implementations are only used to explain the technical principles of the disclosure, and are not intended to limit the scope of protection of the disclosure.

In the description of the disclosure, a "module" or "processor" may include hardware, software, or a combination thereof. A module may include a hardware circuit, various suitable sensors, a communication port, and a memory, or may include a software part, for example, program code, or may be a combination of software and hardware. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that may store program codes, for example, a magnetic disk, a hard disk, an optical disc, a flash memory, a read-only memory, or a random access memory. The term "A and/or B" indicates all possible combinations of A and B, for example, only A, only B, or A and B. The term "at least one of A or B" or "at least one of A and B" has a meaning similar to "A and/or B" and may include only A, only B, or A and B. The terms "a/an" and "this" in the singular form may also include the plural form.

Referring to FIG. 1, FIG. 1 is a schematic flowchart of main steps of a multi-sensor fusion method based on autonomous driving according to an embodiment of the disclosure. As shown in FIG. 1, the multi-sensor fusion method based on autonomous driving in this embodiment of the disclosure mainly includes the following step S 101 to step S103.

Step S101: Obtain a first target state quantity that requires state suppression when performing multi-sensor fusion by applying Kalman filtering.

In this embodiment, when multi-sensor fusion is performed by applying Kalman filtering, the first target state quantity that requires state suppression may be obtained.

In an implementation, the first target state quantity may be a state quantity that satisfies a state suppression condition.

In an implementation, the first target state quantity may be a state quantity that needs to be forced not to be updated. For example, in some cases, the update of some state quantities is of little significance for multi-sensor fusion and will also increase an amount of calculation. Therefore, these state quantities can be forced not to be updated.

Step S102: In a propagation phase of the Kalman filtering, set a state transition matrix for the first target state quantity 's self-dimension as an identity matrix, and set state transition matrices for dimensions related to both the first target state quantity and a second target state quantity as zero matrices, where the second target state quantity is a state quantity that does not require state suppression.

In this embodiment, in the propagation phase of Kalman filtering, the state transition matrix for the own dimension of the first target state quantity that requires state suppression may be set as the identity matrix, and state transition matrices for the dimensions related to both the first target state quantity and the second target state quantity may be set as the zero matrix. In this way, in the propagation phase of Kalman filtering, a covariance matrix of the first target state quantity is not updated, while a covariance matrix of the second target state quantity is still updated and is not affected by the first target state quantity.

Step S103: In an update phase of the Kalman filtering, set a Jacobian matrix of the first target state quantity as a zero matrix, and set a Kalman gain matrix of the first target state quantity as a zero matrix, to implement state suppression of the first target state quantity during multi-sensor fusion without affecting an update of a covariance matrix of the second target state quantity.

In this embodiment, in the update phase of Kalman filtering, the Jacobian matrix of the first target state quantity may be set as the zero matrix, which can make a Kalman gain of the second target state quantity the same as that obtained when there is only the second target state quantity in the update phase of Kalman filtering. However, in this case, a Kalman gain matrix of the first target state quantity is not a zero matrix, which cause an average value of the first target state quantity to change. Therefore, the Kalman gain matrix of the first target state quantity also needs to be set as the zero matrix. Then, when a covariance matrix update is performed, an update of a covariance matrix of the second target state quantity can be exactly the same as that when there is only the second target state quantity. This can implement state suppression of the first target state quantity without affecting the covariance matrix update of the second target state quantity.

In an implementation, Kalman equations for the Kalman filtering may be established according to the following formulas (1) to (5):

$$\text{Propagation phase: } X = f(X) \qquad (1)$$

$$P = \Phi P \Phi^T \qquad (2)$$

$$\text{Update phase: } K = PH^T(HPH^T + R)^{-1} \qquad (3)$$

$$X = X + Kr \qquad (4)$$

$$P = (I - KH)P(I - KH)^T + KRK^T \qquad (5)$$

where X is a state quantity, $f(X)$ is an observation equation, P is a covariance matrix, $\Phi$ is a state transition matrix, $K$ is a Kalman gain, $R$ is observation noise, and H is a Jacobian matrix.

A filtering process of a state in the Kalman equations is shown in formula (6) to formula (10):

$$\text{Propagation phase:} \begin{bmatrix} X_A \\ X_B \end{bmatrix} = \begin{bmatrix} f(X_A) \\ f(X_B) \end{bmatrix} \qquad (6)$$

$$\begin{bmatrix} P_{AA} & P_{AB} \\ P_{AB}{}^T & P_{BB} \end{bmatrix} = \begin{bmatrix} \Phi_{AA} & \Phi_{AB} \\ \Phi_{BA} & \Phi_{BB} \end{bmatrix} \begin{bmatrix} P_{AA} & P_{AB} \\ P_{AB}{}^T & P_{BB} \end{bmatrix} \begin{bmatrix} \Phi_{AA} & \Phi_{AB} \\ \Phi_{BA} & \Phi_{BB} \end{bmatrix}^T \qquad (7)$$

Update phase:

$$\begin{bmatrix} K_A \\ K_B \end{bmatrix} = \begin{bmatrix} P_{AA} & P_{AB} \\ P_{AB}{}^T & P_{BB} \end{bmatrix} \begin{bmatrix} H_A^T \\ H_B^T \end{bmatrix} \left( \begin{bmatrix} H_A & H_B \end{bmatrix} \begin{bmatrix} P_{AA} & P_{AB} \\ P_{AB}{}^T & P_{BB} \end{bmatrix} \begin{bmatrix} H_A^T \\ H_B^T \end{bmatrix} + R \right)^{-1}$$

$$(8)$$

$$\begin{bmatrix} X_A \\ X_B \end{bmatrix} = \begin{bmatrix} X_A \\ X_B \end{bmatrix} + \begin{bmatrix} K_A \\ K_B \end{bmatrix} r \qquad (9)$$

$$\begin{bmatrix} P_{AA} & P_{AB} \\ P_{AB}{}^T & P_{BB} \end{bmatrix} = \left( I - \begin{bmatrix} K_A \\ K_B \end{bmatrix} [H_A \quad H_B] \right) \begin{bmatrix} P_{AA} & P_{AB} \\ P_{AB}{}^T & P_{BB} \end{bmatrix} \Big( I -$$

$$\begin{bmatrix} K_A \\ K_B \end{bmatrix} [H_A \quad H_B] \Big)^T + \begin{bmatrix} K_A \\ K_B \end{bmatrix} R \begin{bmatrix} K_A \\ K_B \end{bmatrix}^T \qquad (10)$$

Assuming that the first target state quantity that requires state suppression is $X_B$ and the second target state quantity that does not require state suppression is $X_A$, in the propagation phase of Kalman filtering, the state transition matrices of the dimensions related to both the first target state quantity and the second target state quantity may be set as the zero matrix, that is, $\Phi_{AB} = \Phi_{BA} = 0$, and the state transition matrix of the own dimension of the first target state quantity may be set as the identity matrix, that is, $\Phi_{BB} = I$.

In the update phase of Kalman filtering, the Jacobian matrix of the first target state quantity may be set as the zero matrix, that is, $H_B = 0$.

Then, the Kalman gain in the update phase can be obtained as:

$$\begin{bmatrix} K_A \\ K_B \end{bmatrix} = \begin{bmatrix} (P_{AA} H_A^T)(H_A P_{AA} H_A^T + R)^{-1} \\ \ldots \end{bmatrix}$$

It can be seen from the above formula that, the Kalman gain matrix of $X_A$ is exactly the same as that obtained when there is only the second target state quantity.

However, in this case, a Kalman gain matrix of $X_B$ is not a zero matrix, which will cause an average state value of $X_B$ to change. Therefore, the Kalman gain matrix of $X_B$ is also set as the zero matrix herein, that is, $K_B = 0$. Then, the covariance is updated to:

$$\begin{bmatrix} P_{AA} & P_{AB} \\ P_{AB}{}^T & P_{BB} \end{bmatrix} = \begin{bmatrix} (I - K_A H_A) P_{AA} (I - K_A H_A)^T + K_A R H_A & \ldots \\ \ldots & P_{BB} \end{bmatrix}$$

It can be seen from the above formula that, the covariance update of $X_A$ is exactly the same as that when there is only the second target state quantity, and is not affected by the first target state quantity $X_B$ that is subjected to state suppression.

Based on the above step S101 to step S103, in this embodiment of the disclosure, when multi-sensor fusion is performed by applying Kalman filtering, if there is the first target state quantity that requires state suppression, in the propagation phase of Kalman filtering, the state transition matrix for the own dimension of the first target state quantity may be set as the identity matrix, and state transition matrices for the dimensions related to both the first target state quantity and the second target state quantity may be set as the zero matrix; and in the update phase of Kalman filtering, the Jacobian matrix of the first target state quantity is set as the zero matrix, and the Kalman gain matrix of the first target state quantity is set as the zero matrix. Through the above configuration method, according to this embodiment of the disclosure, when state suppression is performed on the first target state quantity, it will not affect the covariance matrix of the second target state quantity, thereby not affecting the propagation and update process of the second target state quantity. Moreover, the multi-sensor fusion method of the disclosure can flexibly switch the first target state quantity without affecting a main state, and has the characteristics of being convenient and reliable.

Step S101 is further described below.

In an implementation of this embodiment of the disclosure, step S101 may further include the following step S1011 and step S1012.

Step S1011: Determine whether each state quantity of the Kalman filtering satisfies a corresponding state suppression condition.

Step S1012: Use a state quantity that satisfies the state suppression condition as the first target state quantity.

In this implementation, a corresponding state suppression condition is set for each state quantity of the Kalman filtering, whether each state quantity of the Kalman filtering satisfies the corresponding state suppression condition may be determined, and if the state quantity satisfies the state suppression condition, the state quantity may be used as the first target state quantity.

In an implementation, the state quantity may include a wheel speed coefficient, and a state suppression condition for the wheel speed coefficient is as follows:

a speed of the autonomous driving is less than or equal to a preset speed threshold; or
a route of the autonomous driving is not a straight line.

In an implementation, the state quantity may include a time delay of a sensor, and a state suppression condition for the time delay is as follows:
an acceleration of the autonomous driving is less than or equal to a preset acceleration threshold.

In an implementation, the state quantity may include mounting angle errors of sensors modeled in a wheel speed coordinate system, the sensors may include an inertial measurement unit, a Global Navigation Satellite System (GNSS) sensor, and a map matching positioning sensor, and the mounting angle errors of the sensors may include a pitch angle error and/or a yaw angle error, where GNSS is the Global Navigation Satellite System, which is a space-based radio navigation positioning system that can provide users with all-weather 3D coordinates, speed, and time information at any position on the earth's surface or in near-earth space. A GNSS sensor is a sensor set up on an autonomous vehicle and used in conjunction with the Global Navigation Satellite System. The GNSS sensor may be a sensor used in conjunction with systems such as the Global Positioning System (GPS), the BeiDou Navigation Satellite System, the Galileo satellite navigation system, etc., and any sensor that can provide global position, speed, and attitude measurements may be a GNSS sensor.

A state suppression condition for the pitch angle error of the inertial measurement unit is as follows:

a speed of the autonomous driving is less than or equal to a preset speed threshold; or
a route of the autonomous driving is not a straight line.

A state suppression condition for the yaw angle error of the inertial measurement unit is as follows:

a speed of the autonomous driving is less than or equal to a preset speed threshold; or
an acceleration of the autonomous driving is less than or equal to a preset acceleration threshold; or
a route of the autonomous driving is not a straight line.

A state suppression condition for the yaw angle error of the GNSS sensor is as follows:

a speed of the autonomous driving is less than or equal to a preset speed threshold; or
calibration of the yaw angle error of the inertial measurement unit has not reached a convergence condition.

A state suppression condition for the yaw angle error of the map matching positioning sensor is as follows:

a speed of the autonomous driving is less than or equal to a preset speed threshold; or
calibration of the yaw angle error of the inertial measurement unit has not reached a convergence condition; or
the map matching positioning sensor has not obtained a high-quality matching positioning result, where the high-quality matching positioning result is determined based on a quality bit of data in the matching positioning result.

In an implementation, the map matching positioning sensor may achieve positioning by matching the data collected by the sensor with a digital map. The map matching positioning sensor may include a vehicle-mounted camera and a vehicle-mounted LiDAR. The digital map may include a high-precision map and a point cloud map. For example, image data collected by using the vehicle-mounted camera is matched with the high-precision map; and point cloud data collected by using the vehicle-mounted LiDAR is matched with the point cloud map.

In an implementation, the state quantity may include a lever arm value between a sensor coordinate system of a sensor and an inertial measurement unit coordinate system of an inertial measurement unit, and a state suppression condition for the lever arm value is as follows:
a speed of the autonomous driving is less than or equal to a preset speed threshold.

In an implementation, the state quantity may include a local map offset of the digital map, where the digital map may include a high-precision map and a point cloud map. A state suppression condition for the local map offset is as follows:

a speed of the autonomous driving is less than or equal to a preset speed threshold; or
the map matching positioning sensor has not obtained a high-quality matching positioning result, where the high-quality matching positioning result is determined based on a quality bit of data in the matching positioning result; or
calibration of the yaw angle error of the inertial measurement unit has not reached a convergence condition.

In an implementation, the speed threshold may be 3 m/s, and the acceleration threshold may be 0.2 m/s².

It should be noted that, although the steps are described in a specific order in the above embodiments, those skilled in the art may understand that in order to implement the effects of the disclosure, different steps are not necessarily performed in such an order, but may be performed simultaneously (in parallel) or in other orders, and these changes shall all fall within the scope of protection of the disclosure.

Those skilled in the art can understand that all or some of the procedures in the method of the above embodiment of the disclosure may also be implemented by a computer program instructing relevant hardware. The computer program may be stored in a computer-readable storage medium, and when the computer program is executed by a processor, the steps of the above method embodiments may be implemented. The computer program includes computer program code, which may be in a source code form, an object code form, an executable file form, some intermediate forms, or the like. The computer-readable storage medium may include: any entity or apparatus that can carry the computer program code, a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Further, the disclosure further provides a control apparatus. In an embodiment of the control apparatus according to the disclosure, the control apparatus includes at least one processor and at least one storage apparatus. The storage apparatus may be configured to store a program for performing the multi-sensor fusion method based on autonomous driving in the above method embodiments. The processor may be configured to execute a program in the storage apparatus, where the program includes, but is not limited to, the program for performing the multi-sensor fusion method based on autonomous driving in the above method embodiments. For ease of description, only parts related to the embodiments of the disclosure are shown. For specific technical details that are not disclosed, reference may be made to the method part of the embodiments of the disclosure.

The control apparatus in this embodiment of the disclosure may be a control apparatus formed by various electronic devices. In some possible implementations, the control apparatus may include a plurality of storage apparatuses and a plurality of processors. The program for performing the multi-sensor fusion method based on autonomous driving in the above method embodiments may be divided into a plurality of segments of subprogram, and each segment of subprogram may be loaded and executed by a processor to perform a different step of the multi-sensor fusion method based on autonomous driving in the above method embodiments. Specifically, each segment of subprogram may be stored in a different storage apparatus, and each processor may be configured to execute programs in one or more storage apparatuses to jointly implement the multi-sensor fusion method based on autonomous driving in the above method embodiments. In other words, each processor performs a different step of the multi-sensor fusion method based on autonomous driving in the above method embodiments, to jointly implement the multi-sensor fusion method based on autonomous driving in the above method embodiments.

The plurality of processors may be processors deployed on a same device. For example, the foregoing control apparatus may be a high-performance device including a plurality of processors, and the plurality of processors may be processors configured on the high-performance device. Alternatively, the plurality of processors may be processors deployed on different devices. For example, the foregoing control apparatus may be a server cluster, and the plurality of processors may be processors on different servers in the server cluster.

Further, the disclosure further provides a computer-readable storage medium. In an embodiment of the computer-readable storage medium according to the disclosure, the computer-readable storage medium may be configured to store a program for performing the multi-sensor fusion method based on autonomous driving in the above method embodiments, where the program may be loaded and executed by a processor to implement the above multi-sensor fusion method based on autonomous driving. For ease of description, only parts related to the embodiments of the disclosure are shown. For specific technical details that are not disclosed, reference may be made to the method part of the embodiments of the disclosure. The computer-readable storage medium may be a storage apparatus formed by various electronic devices. Optionally, the computer-readable storage medium in the embodiment of the disclosure is a non-transitory computer-readable storage medium.

Further, the disclosure further provides a vehicle. In a vehicle embodiment according to the disclosure, the vehicle may include the control apparatus in the control apparatus embodiment.

Further, it should be understood that, because the configuration of modules is merely intended to illustrate function units of the apparatus in the disclosure, physical devices corresponding to these modules may be a processor itself, or part of software, part of hardware, or part of a combination of software and hardware in the processor. Therefore, the number of modules in the figure is merely illustrative.

Those skilled in the art can understand that the modules in the apparatus may be adaptively split or merged. Such a split or combination of specific modules does not cause the technical solutions to depart from the principle of the disclosure. Therefore, technical solutions after any such split or combination shall all fall within the scope of protection of the disclosure.

Heretofore, the technical solutions of the disclosure have been described with reference to the preferred implementations shown in the accompanying drawings. However, those skilled in the art can readily understand that the scope of protection of the disclosure is apparently not limited to these specific implementations. Those skilled in the art may make equivalent changes or substitutions to the related technical features without departing from the principle of the disclosure, and all the technical solutions with such changes or substitutions shall fall within the scope of protection of the disclosure.

**Claims**

1. A multi-sensor fusion method based on autonomous driving, comprising:

   obtaining (S101) a first target state quantity that requires state suppression when performing multi-sensor fusion by applying Kalman filtering;
   in a propagation phase of the Kalman filtering, setting (S102) a state transition matrix for the first target state quantity's self-dimension as an identity matrix, and setting state transition matrices for dimensions related to both the first target state quantity and a second target state quantity as zero matrices, wherein the second target state quantity is a state quantity that does not require state suppression; and
   in an update phase of the Kalman filtering, setting (S103) a Jacobian matrix of the first target state quantity as a zero matrix, and setting a Kalman gain matrix of the first target state quantity as a zero matrix, to implement state suppression of the first target state quantity during the multi-sensor fusion without affecting an update of a covariance matrix of the second target state quantity,
   wherein the step (S101) of "obtaining a first target state quantity that requires state suppression" comprises:

      determining whether each state quantity of the Kalman filtering satisfies a corresponding state suppression condition; and
      using a state quantity that satisfies the state suppression condition as the first target state quantity,
      wherein the state quantity comprises a wheel speed coefficient, and a state suppression condition for the wheel speed coefficient is as follows:

         a speed of the autonomous driving is less than or equal to a preset speed threshold; or
         a route of the autonomous driving is not a straight line.

2. The multi-sensor fusion method based on autonomous driving according to claim 1, wherein the state quantity comprises a time delay of a sensor, and a state suppression condition for the time delay is as follows:
   an acceleration of the autonomous driving is less than or equal to a preset acceleration threshold.

3. The multi-sensor fusion method based on autonomous driving according to claim 1 or 2, wherein the state quantity comprises mounting angle errors of sensors modeled in a wheel speed coordinate system, the sensors comprise an inertial measurement unit, a GNSS sensor, and a map matching positioning sensor, and the mounting angle errors of the sensors comprise a pitch angle error and/or a yaw angle error;
   a state suppression condition for the pitch angle error of the inertial measurement unit is as follows:

      a speed of the autonomous driving is less than or equal to a preset speed threshold; or
      a route of the autonomous driving is not a straight line;
      a state suppression condition for the yaw angle error of the inertial measurement unit is as follows:

         a speed of the autonomous driving is less than or equal to a preset speed threshold; or
         an acceleration of the autonomous driving is less than or equal to a preset acceleration threshold; or
         a route of the autonomous driving is not a straight line;
         a state suppression condition for the yaw angle error of the GNSS sensor is as follows:

            a speed of the autonomous driving is less than or equal to a preset speed threshold; or
            calibration of the yaw angle error of the inertial measurement unit has not reached a convergence condition; and
            a state suppression condition for the yaw angle error of the map matching positioning sensor is as follows:

a speed of the autonomous driving is less than or equal to a preset speed threshold; or

calibration of the yaw angle error of the inertial measurement unit has not reached a convergence condition; or

the map matching positioning sensor has not obtained a high-quality matching positioning result, where the high-quality matching positioning result is determined based on a quality bit of data in the matching positioning result.

4. The multi-sensor fusion method based on autonomous driving according to any one of claims 1 to 3, wherein the state quantity comprises a lever arm value between a sensor coordinate system of a sensor and an inertial measurement unit coordinate system of an inertial measurement unit, and a state suppression condition for the lever arm value is as follows:

a speed of the autonomous driving is less than or equal to a preset speed threshold.

5. The multi-sensor fusion method based on autonomous driving according to any one of claims 1 to 4, wherein the state quantity comprises a local map offset of a digital map, and a state suppression condition for the local map offset is as follows:

a speed of the autonomous driving is less than or equal to a preset speed threshold; or

the map matching positioning sensor has not obtained a high-quality matching positioning result, where the high-quality matching positioning result is determined based on a quality bit of data in the matching positioning result; or

calibration of the yaw angle error of the inertial measurement unit has not reached a convergence condition.

6. A control apparatus, comprising at least one processor and at least one storage apparatus configured to store a plurality of pieces of program code, wherein the program code is adapted to be loaded and executed by the processor to perform a multi-sensor fusion method based on autonomous driving according to any one of claims 1 to 5.

7. A non-transitory computer-readable storage medium storing a plurality of pieces of program code, wherein the program code is adapted to be loaded and executed by a processor to perform a multi-sensor fusion method based on autonomous driving according to any one of claims 1 to 5.

8. A vehicle, comprising a control apparatus according to claim 6.

**Patentansprüche**

1. Multisensorfusionsverfahren, basierend auf autonomem Fahren, umfassend:

Erhalten (S101) einer ersten Zielzustandsgröße, die Zustandsunterdrückung erfordert, wenn Multisensorfusion unter Anwendung von Kalman-Filterung durchgeführt wird;

in einer Propagationsphase der Kalman-Filterung, Einstellen (S102) einer Zustandsübergangsmatrix für die Selbstdimension der ersten Zielzustandsgröße auf eine Einheitsmatrix, und

Einstellen von Zustandsübergangsmatrizen für Dimensionen, die sich sowohl auf die erste Zielzustandsgröße als auch auf eine zweite Zielzustandsgröße beziehen, auf Nullmatrizen, wobei die zweite Zielzustandsgröße eine Zustandsgröße ist, die keine Zustandsunterdrückung erfordert; und

in einer Aktualisierungsphase der Kalman-Filterung, Einstellen (S103) einer Jacobi-Matrix der ersten Zielzustandsgröße auf eine Nullmatrix, und Einstellen einer Kalman-Gain-Matrix der ersten Zielzustandsgröße auf eine Nullmatrix, zum Implementieren von Zustandsunterdrückung der ersten Zielzustandsgröße während der Multisensorfusion, ohne eine Aktualisierung der Kovarianzmatrix der zweiten Zielzustandsgröße zu beeinträchtigen,

wobei der Schritt (S101) von "Erhalten einer ersten Zielzustandsgröße, die Zustandsunterdrückung erfordert", Folgendes umfasst:

Bestimmen, ob jede Zustandsgröße der Kalman-Filterung eine korrespondierende Zustandsunterdrückungsbedingung erfüllt, und

Verwenden einer Zustandsgröße, die die Zustandsunterdrückungsbedingung erfüllt, als die erste Zielzustandsgröße,

wobei die Zustandsgröße einen Raddrehzahlkoeffizienten umfasst, und wobei eine Zustandsunterdrückungsbedingung für den Raddrehzahlkoeffizienten folgendermaßen lautet:

eine Geschwindigkeit des autonomen Fahrens ist kleiner oder gleich einer voreingestellten Geschwindigkeitsschwelle; oder

eine Route des autonomen Fahrens ist keine gerade Linie.

2. Multisensorfusionsverfahren, basierend auf autonomem Fahren, nach Anspruch 1, wobei die Zustandsgröße eine Zeitverzögerung eines Sensors umfasst, und wobei eine Zustandsunterdrückungsbedingung für die Zeitverzögerung folgendermaßen lautet:

eine Beschleunigung des autonomen Fahrens ist kleiner oder gleich einer voreingestellten Beschleunigungsschwelle.

3. Multisensorfusionsverfahren, basierend auf autonomem Fahren, nach Anspruch 1 oder 2, wobei die Zustandsgröße Montagewinkelfehler von Sensoren, die in einem Raddrehzahl-Koordinatensystem modelliert werden, umfasst, wobei die Sensoren eine Trägheitsmessungseinheit, einen GNSS-Sensor und einen Kartenabgleich-Positionierungssensor umfassen; und wobei die Montagewinkelfehler der Sensoren einen Nickwinkelfehler und/oder einen Gierwinkelfehler umfassen;

wobei eine Zustandsunterdrückungsbedingung für den Nickwinkelfehler der Trägheitsmessungseinheit folgendermaßen lautet:

eine Geschwindigkeit des autonomen Fahrens ist kleiner oder gleich einer voreingestellten Geschwindigkeitsschwelle; oder
eine Route des autonomen Fahrens ist keine gerade Linie;
wobei eine Zustandsunterdrückungsbedingung für den Gierwinkelfehler der Trägheitsmessungseinheit folgendermaßen lautet:

eine Geschwindigkeit des autonomen Fahrens ist kleiner oder gleich einer voreingestellten Geschwindigkeitsschwelle; oder
eine Beschleunigung des autonomen Fahrens ist kleiner oder gleich einer voreingestellten Beschleunigungsschwelle; oder
eine Route des autonomen Fahrens ist keine gerade Linie;
wobei eine Zustandsunterdrückungsbedingung für den Gierwinkelfehler des GNSS-Sensors folgendermaßen lautet: eine Geschwindigkeit des autonomen Fahrens ist kleiner oder gleich einer voreingestellten Geschwindigkeitsschwelle; oder
Kalibrierung des Gierwinkelfehlers der Trägheitsmessungseinheit hat noch keine Konvergenzbedingung erreicht; und
wobei eine Zustandsunterdrückungsbedingung für den Gierwinkelfehler des Kartenabgleich-Positionierungssensors folgendermaßen lautet:

eine Geschwindigkeit des autonomen Fahrens ist kleiner oder gleich einer voreingestellten Geschwindigkeitsschwelle; oder
Kalibrierung des Gierwinkelfehlers der Trägheitsmessungseinheit hat noch keine Konvergenzbedingung erreicht; oder
der Kartenabgleich-Positionierungssensor hat kein hochqualitatives übereinstimmendes Positionierungsresultat erhalten, wobei das hochqualitative übereinstimmende Positionierungsresultat, basierend auf einem Qualitätsbit von Daten in dem übereinstimmenden Positionierungsresultat bestimmt wird.

4. Multisensorfusionsverfahren, basierend auf autonomem Fahren, nach einem der Ansprüche 1 bis 3, wobei die Zustandsgröße einen Hebelarmwert zwischen einem Sensorkoordinatensystem eines Sensors und einem Trägheitsmessungseinheit-Koordinatensystem einer Trägheitsmessungseinheit umfasst, und eine Zustandsunterdrückungsbedingung für den Hebelarmwert folgendermaßen lautet:

eine Geschwindigkeit des autonomen Fahrens ist kleiner oder gleich einer voreingestellten Geschwindigkeitsschwelle.

5. Multisensorfusionsverfahren, basierend auf autonomem Fahren, nach einem der Ansprüche 1 bis 4, wobei die Zustandsgröße einen lokalen Kartenversatz einer digitalen Karte umfasst, und wobei eine Zustandsunterdrückungsbedingung für den lokalen Kartenversatz folgendermaßen lautet:

eine Geschwindigkeit des autonomen Fahrens ist kleiner oder gleich einer voreingestellten Geschwindigkeits-

**EP 4 425 099 B1**

schwelle; oder

der Kartenabgleich-Positionierungssensor hat kein hochqualitatives übereinstimmendes Positionierungsresultat erhalten, wobei das hochqualitative übereinstimmende Positionierungsresultat basierend auf einem Qualitätsbit von Daten in dem übereinstimmenden Positionierungsresultat bestimmt wird; oder

Kalibrierung des Gierwinkelfehlers der Trägheitsmessungseinheit noch keine Konvergenzbedingung erreicht hat.

6. Steuerungseinrichtung, umfassend mindestens einen Prozessor und mindestens eine Speicherungseinrichtung, ausgelegt zum Speichern einer Vielzahl von Stücken von Programmcode, wobei der Programmcode dafür eingerichtet ist, durch den Prozessor geladen und ausgeführt zu werden, um ein Multisensorfusionsverfahren, basierend auf autonomem Fahren, nach einem der Ansprüche 1 bis 5, durchzuführen.

7. Nicht-transitorisches, computerlesbares Speicherungsmedium, das eine Vielzahl von Programmcodestücken speichert, wobei der Programmcode dafür eingerichtet ist, durch einen Prozessor geladen und ausgeführt zu werden, um ein Multisensorfusionsverfahren, basierend auf autonomem Fahren, nach einem der Ansprüche 1 bis 5 durchzuführen.

8. Fahrzeug, das eine Steuerungseinrichtung nach Anspruch 6 umfasst.

**Revendications**

1. Procédé de fusion multi-capteurs basé sur une conduite autonome, comprenant :

l'obtention (S101) d'une première grandeur d'état cible qui nécessite une suppression d'état lors de la réalisation d'une fusion multi-capteurs par application d'un filtrage de Kalman ;
dans une phase de propagation du filtrage de Kalman, la définition (S102) d'une matrice de transition d'état pour la dimension propre de la première grandeur d'état cible comme une matrice identité, et la définition de matrices de transition d'état pour des dimensions relatives à la fois à la première grandeur d'état cible et à une deuxième grandeur d'état cible comme des matrices nulles, la deuxième grandeur d'état cible étant une grandeur d'état qui ne nécessite pas de suppression d'état ; et
dans une phase de mise à jour du filtrage de Kalman, la définition (S103) d'une matrice jacobienne de la première grandeur d'état cible comme une matrice nulle, et la définition d'une matrice de gain de Kalman de la première grandeur d'état cible comme une matrice nulle, de manière à mettre en œuvre une suppression d'état de la première grandeur d'état cible pendant la fusion multi-capteurs sans affecter une mise à jour d'une matrice de covariance de la deuxième grandeur d'état cible,
dans lequel l'étape d' "obtention d'une première grandeur d'état cible qui nécessite une suppression d'état" comprend :

la détermination de si chaque grandeur du filtrage de Kalman satisfait à une condition de suppression d'état correspondante ; et
l'utilisation, comme première grandeur d'état cible, d'une grandeur d'état qui satisfait à la condition de suppression d'état,
dans lequel la grandeur d'état comprend un coefficient de vitesse de roue, et une condition de suppression d'état pour le coefficient de vitesse de roue est la suivante :

une vitesse de la conduite autonome est inférieure ou égale à un seuil de vitesse prédéfini ; ou
un itinéraire de la conduite autonome n'est pas une ligne droite.

2. Procédé de fusion multi-capteurs basé sur une conduite autonome selon la revendication 1, dans lequel la grandeur d'état comprend un retard temporel d'un capteur, et une condition de suppression d'état pour le retard temporel est la suivante :
une accélération de la conduite autonome est inférieure ou égale à un seuil d'accélération prédéfini.

3. Procédé de fusion multi-capteurs basé sur une conduite autonome selon la revendication 1 ou 2, dans lequel la grandeur d'état comprend des erreurs d'angle de montage de capteurs modélisés dans un système de coordonnées de vitesse de roue, les capteurs comprennent une unité de mesure inertielle, un capteur GNSS, et un capteur de positionnement par appariement cartographique, et les erreurs d'angle de montage des capteurs comprennent une

12

erreur d'angle de tangage et/ou une erreur d'angle de lacet ;
une condition de suppression d'état pour l'erreur d'angle de tangage de l'unité de mesure inertielle est la suivante :

une vitesse de la conduite autonome est inférieure ou égale à un seuil de vitesse prédéfini ; ou
un itinéraire de la conduite autonome n'est pas une ligne droite ;
une condition de suppression d'état pour l'erreur d'angle de lacet de l'unité de mesure inertielle est la suivante :

une vitesse de la conduite autonome est inférieure ou égale à un seuil de vitesse prédéfini ; ou
une accélération de la conduite autonome est inférieure ou égale à un seuil d'accélération prédéfini ; ou
un itinéraire de la conduite autonome n'est pas une ligne droite ;
une condition de suppression d'état pour l'erreur d'angle de lacet du capteur GNSS est la suivante :

une vitesse de la conduite autonome est inférieure ou égale à un seuil de vitesse prédéfini ; ou
l'étalonnage de l'erreur d'angle de lacet de l'unité de mesure inertielle n'a pas atteint une condition de convergence ; et
une condition de suppression d'état pour l'erreur d'angle de lacet du capteur de positionnement par appariement cartographique est la suivante :

une vitesse de la conduite autonome est inférieure ou égale à un seuil de vitesse prédéfini ; ou
l'étalonnage de l'erreur d'angle de lacet de l'unité de mesure inertielle n'a pas atteint une condition de convergence ; ou
le capteur de positionnement par appariement cartographique n'a pas obtenu un résultat de positionnement par appariement de haute qualité, le résultat de positionnement par appariement de haute qualité étant déterminé sur la base d'un bit de qualité de données dans le résultat de positionnement par appariement.

4. Procédé de fusion multi-capteurs basé sur une conduite autonome selon l'une quelconque des revendications 1 à 3, dans lequel la grandeur d'état comprend une valeur de bras de levier entre un système de coordonnées de capteur d'un capteur et un système de coordonnées d'unité de mesure inertielle d'une unité de mesure inertielle, et une condition de suppression d'état pour la valeur de bras de levier est la suivante :
une vitesse de la conduite autonome est inférieure ou égale à un seuil de vitesse prédéfini.

5. Procédé de fusion multi-capteurs basé sur une conduite autonome selon l'une quelconque des revendications 1 à 4, dans lequel la grandeur d'état comprend un décalage cartographique local d'une carte numérique, et une condition de suppression d'état pour le décalage cartographique local est la suivante :

une vitesse de la conduite autonome est inférieure ou égale à un seuil de vitesse prédéfini ; ou
le capteur de positionnement par appariement cartographique n'a pas obtenu un résultat de positionnement par appariement de haute qualité, le résultat de positionnement par appariement de haute qualité étant déterminé sur la base d'un bit de qualité de données dans le résultat de positionnement par appariement ; ou
l'étalonnage de l'erreur d'angle de lacet de l'unité de mesure inertielle n'a pas atteint une condition de convergence.

6. Appareil de commande, comprenant au moins un processeur et au moins un appareil de stockage configuré pour stocker une pluralité d'éléments d'un code de programme, le code de programme étant adapté à être chargé et exécuté par le processeur afin de réaliser un procédé de fusion multi-capteurs basé sur une conduite autonome selon l'une quelconque des revendications 1 à 5.

7. Support de stockage non transitoire lisible par ordinateur stockant une pluralité d'éléments d'un code de programme, le code de programme étant adapté à être chargé et exécuté par le processeur afin de réaliser un procédé de fusion multi-capteurs basé sur une conduite autonome selon l'une quelconque des revendications 1 à 5.

8. Véhicule, comprenant un appareil de commande selon la revendication 6.

S101

Obtain a first target state quantity that requires state suppression when performing multi-sensor fusion by applying Kalman filtering

S102

In a propagation phase of the Kalman filtering, set a state transition matrix for the first target state quantity's self-dimension as an identity matrix, and set state transition matrices for dimensions related to both the first target state quantity and a second target state quantity as zero matrices, where the second target state quantity is a state quantity that does not require state suppression

S103

In an update phase of the Kalman filtering, set a Jacobian matrix of the first target state quantity as a zero matrix, and set a Kalman gain matrix of the first target state quantity s a zero matrix, to implement state suppression of the first target state quantity during the multi-sensor fusion without affecting an update of a covariance matrix of the second target state quantity

*FIG. 1*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310044946
- US 2021341624 A1
- CN 111721289 B
- CN 107289933 B